# EUROPÄISCHE PATENTSCHRIFT

(11) **EP 3 847 044 B1**
(45) Veröffentlichungstag und Bekanntmachung des Hinweises auf die Patenterteilung: **02.10.2024**
(21) Anmeldenummer: 19732581.4
(22) Anmeldetag: 18.06.2019
(51) Int. Cl.: B60G 11/08, B60G 3/16, B60G 3/28, B60G 21/05, B60G 11/10, B60G 3/10

(54) **KRAFTFAHRZEUG-RADAUFHÄNGUNG MIR EINER X-FEDEREINRICHTUNG**
MOTOR VEHICLE WHEEL SUSPENSION SYSTEM WITH AN X-SHAPED SPRING DEVICE
SUSPENSION DE VÉHICULE À MOTEUR AVEC DISPOSITIF À RESSORT X

(30) Priorität: 05.09.2018 DE 102018215111
(43) Veröffentlichungstag der Anmeldung: 14.07.2021
(73) Patentinhaber: Volkswagen Aktiengesellschaft, 38440 Wolfsburg (DE)
(72) Erfinder: WINTER, Ingo, 38550 Isenbüttel (DE); FIEBIG, Sierk, 38259 Salzgitter (DE); SCHIWIORA, Nils, 38106 Braunschweig (DE)
(86) Internationale Anmeldenummer: PCT/EP2019/065926
(87) Internationale Veröffentlichungsnummer: WO 2020/048655

(56) Entgegenhaltungen:
- WO-A1-87/02316
- DE-A1- 102011 083 173
- DE-A1- 102013 209 648
- DE-A1- 102016 220 325
- JP-A- H 058 625
- US-A- 1 292 166
- US-A- 1 375 556
- US-A- 1 586 510
- US-A- 1 789 845

## Beschreibung

Die Erfindung bezieht sich auf eine Kraftfahrzeug-Radaufhängung mit einer X-Federeinrichtung gemäß den Merkmalen des Oberbegriffs von Patentanspruch 1 sowie weiterhin auf ein Kraftfahrzeug mit einer solchen Kraftfahrzeug-Radaufhängung.

Eine Kraftfahrzeug-Radaufhängung mit einer X-Federeinrichtung der eingangs genannten Art ist aus DE 10 2016 220 325 A1 bekannt. Die beiden Blattfedern dieser X-Federeinrichtung verlaufen von der Fahrzeugmitte im Wesentlichen geradlinig nach außen und schließen hierbei einen spitzen Winkel von 15° bis 35° miteinander ein. Die obenliegende zweite Blattfeder ist kürzer als die erste Blattfeder und über ein Koppelelement von unten an einen Abschnitt des Fahrzeugaufbaus, insbesondere einen Längsträger desselben angeschlossen.

Eine weitere Kraftfahrzeug-Radaufhängung mit einer X-Federeinrichtung der eingangs genannten Art und entsprechend dem Oberbegriff des Anspruchs 1 ist aus JP H05 8625 A. Auch hier erfolgt der fahrzeugseitige Anschluss der zweiten Blattfeder über Koppelelement. Die zweite Blattfeder kann dabei leicht gekrümmt ausgebildet sein. Das Koppelelement sitzt jedoch auf derjenigen Seite der zweiten Blattfeder, welche durchgängig von ihren ersten Ende bis zu ihrem zweiten Ende von der ersten Blattfeder weg weist.

Der Erfindung liegt die Aufgabe zugrunde hierzu Alternativen aufzuzeigen, welche sich insbesondere für Fahrzeuge mit größerer Anbindungshöhe eignen.

Diese Aufgabe wird durch eine Kraftfahrzeug-Radaufhängung mit einer X-Federeinrichtung gemäß Patentanspruch 1 sowie durch ein Kraftfahrzeug gemäß Patentanspruch 6 gelöst. Die erfindungsgemäße Kraftfahrzeug-Radaufhängung zeichnet sich dadurch aus, dass sich der Bogenabschnitt am zweiten Ende der zweiten Blattfeder über einen Bogenwinkel im Bereich von 150 bis 190° erstreckt.

Hierdurch kann im Vergleich zu DE 10 2016 220 325 A1 und JP H05 8625 A auf ein langes Koppelelement verzichtet und eine stabilere Anbindung der zweiten Blattfeder an den Fahrzeugaufbau erzielt werden. Die ist vor allem bei Fahrzeugen mit verhältnismäßig hoch angeordneten Längsträgeren wie beispielsweise SUVs von Vorteil.

Zudem wird die zweite Blattfeder durch vergleichsweise mehr federndes Material geringer beansprucht.

Über die beiden Blattfedern erfolgt eine aufbauseitige Krafteinleitung an zwei voneinander beabstandeten Stellen, nämlich zum einen über das zweite Ende der zweiten Blattfeder sowie über den Bereich der zusammengeführten ersten Enden beider Blattfeder, wodurch die korrespondierenden aufbauseitigen Strukturen am Kraftfahrzeug weniger massiv und damit weniger schwer ausgebildet werden können.

Die X-Federeinrichtung kann in einer Kraftfahrzeug-Radaufhängung herkömmliche Federlenker mit an diesen abgestützten Aufbaufedern ersetzen, und zwar gegebenenfalls auch derart, dass die herkömmlichen rad- und aufbauseitigen Anbindungsstellen erhalten bleiben.

Vorteilhafte Ausgestaltungen der Erfindung sind Gegenstand weiterer Patentansprüche.

So kann die zweite Blattfeder derart ausgebildet sein, dass der Bogenabschnitt am zweiten Ende an einen weiteren Bogenabschnitt oder geraden Abschnitt der zweiten Blattfeder anschließt, welcher größere Krümmungsradien als der Bogenabschnitt am zweiten Ende aufweist. Dies gewährleistet eine günstige Belastung der zweiten Blattfeder.

Insbesondere kann die zweite Blattfeder so ausgeführt sein, dass die vorstehend genannte Form im Wesentlichen bereits im unbelasteten Zustand eingenommen wird.

Im Unterschied zu DE 10 2016 220 325 A1 ist die gestreckte Länge der zweiten Blattfeder bevorzugt größer als die gestreckte Länge der ersten Blattfeder, so dass die zweite Blattfeder vorliegend ein deutlich erhöhtes Energieaufnahmevermögen besitzt.

In vorteilhafter Ausgestaltung kann das zweite Ende der zweiten Blattfeder in Einbaulage in Richtung Fahrzeugmitte weisen, so dass die zweite Blattfeder ohne großen Aufwand von unten gegen einen Abschnitt des Fahrzeugaufbaus anliegen kann. Ein direkter Anschluss am Fahrzeugaufbau unter Zwischenschaltung einer allenfalls dünnen elastischen Lage aus Elastomermaterial oder dergleichen ist hierbei möglich.

Die zweite Blattfeder kann in Einbaulage und bei Blickrichtung in Richtung Fahrzeuglängsmittelachse C-förmig ausgebildet sein, wobei der untenliegende Abschnitt der C-Form weiter in Richtung Fahrzeugmitte reicht als der obenliegende Abschnitt der C-Form.

Weiterhin kann am einwärts gekrümmten zweiten Ende der zweiten Blattfeder eine Federauflage zur Abstützung gegen einen Fahrzeugaufbau von unten vorgesehen werden, um beispielsweise Knarzgeräusche auszuschließen.

Gemäß einer weiteren vorteilhaften Ausgestaltung sind die erste Blattfeder und die zweite Blattfeder als separate Bauteile ausgebildet, die an ihren ersten Enden miteinander verspannt sind. Dazu kann beispielsweise die erste Befestigungseinrichtung eine Einspannung zum gegenseitigen Verspannen der ersten Enden aufweisen.

Weiterhin kann die erste Befestigungseinrichtung eine Aufnahme für ein Lager zur schwenkbaren Abstützung an einem Fahrzeugaufbau oder einem am Fahrzeugaufbau vorgesehenen Hilfsrahmen aufweisen. Durch eine solche schwenkbaren Abstützung können insbesondere Relativbewegungen, welche sich infolge der gewünschten Verformungen der Blattfedern ergeben, besser ausgeglichen werden. Zudem lassen sich hierdurch Zwängungen vermeiden.

Die zweite Befestigungseinrichtung kann eine Lageraufnahme zur schwenkbaren Abstützung an einem Radträger aufweisen. Über diese zweite Befestigungseinrichtung werden in einer Radaufhängung Hoch- und Querkräfte vom Radträger an die erste Blattfeder übertragen. Die schwenkbare Anlenkung vermeidet Zwängungen und eröffnet einen größeren Gestaltungsrahmen im Hinblick auf das Anbringen weiterer Radführungsglieder zwischen dem Radträger und dem Fahrzeugaufbau. Es ist jedoch auch möglich, bei Gewährleistung entsprechender Elastizitäten, die erste Blattfeder an dem Radträger nicht-gelenkig zu befestigen, beispielsweise fest einzuspannen.

Weiterhin können die ersten und zweiten Blattfedern sich jeweils in Fahrzeugquerrichtung erstrecken oder mit dieser bei Betrachtung in einer horizontalen Ebene einen Winkel von maximal +/-15° einschließen. In Blickrichtung der Längsrichtung des Kraftfahrzeugs ergibt sich damit ein X-förmiges Federsystem, dessen Arme durch die insgesamt vier Blattfedern - jeweils zwei Blattfedern je Radseite - gebildet werden.

Hierdurch wird eine besonders leichte und kostengünstige Achse für ein Kraftfahrzeug geschaffen. Die erfindungsgemäße Lösung eignet sich insbesondere für Hinterachsen von Personenkraftfahrzeugen und leichten Nutzfahrzeugen mit hochliegender Anbindung der zweiten Blattfeder, ohne jedoch hierauf beschränkt zu sein.

Die zweiten Blattfedern sind jeweils von unten an einem Längsträger oder einem vergleichbaren Abschnitt des Fahrzeugaufbaus abgestützt. Hierbei macht man sich zunutze, dass die Längsträger eines Kraftfahrzeugs in der Regel eine hinreichende Stabilität für die Abstützung von Hochkräften aufweisen, so dass der Einsatz einer Blattfeder aus faserverstärktem Kunststoff an dieser Stelle keine zusätzlichen Verstärkungsmaßnahmen erfordert, welche aufbauseitig das Gesamtgewicht des Kraftfahrzeugs erhöhen würden.

Wie oben bereits angedeutet, ermöglicht die erfindungsgemäße Federeinrichtung eine besonders flachbauende Achskonstruktion. Insbesondere können hierbei die in Einbaulage untenliegenden ersten Blattfedern in Ruhestellung des Fahrzeugs auf einer horizontalen Fläche horizontal verlaufen oder mit einer horizontalen Ebene einen Winkel von maximal +/-10° einschließen.

Weiterhin können die ersten Befestigungseinrichtungen in Fahrzeugquerrichtung in einem Mittelbereich angeordnet sein, welcher in Fahrzeugquerrichtung durch die Längsträger des Fahrzeugaufbaus begrenzt wird. Insbesondere ist es möglich, die ersten Befestigungseinrichtungen in Fahrzeugquerrichtung bezogen auf die Spurweite des Fahrzeugs in einem mittleren Drittel, insbesondere mittleren Fünftel, um die Längsmittelachse anzuordnen. Dies ermöglicht eine besonders große Länge der Blattfedern und damit ein entsprechend hohes Energieabsorptionsvermögen, welches es wiederum gestattet, die Masse des Fahrzeugaufbaus allein über die Blattfedern abzustützen, wodurch für diesen Zweck üblicherweise vorgesehene Schraubenfedern gegebenenfalls vollständig entfallen können.

Ferner kann je Paar aus erster und zweiter Blattfeder ein Koppelglied vorgesehen sein, welches diese in Richtung Fahrzeugmitte über den Punkt der fahrzeugaufbauseitigen Anbindung der ersten Befestigungseinrichtung hinaus fortsetzt. Die Koppelglieder beider Radseiten können durch ein Gelenk miteinander verbunden sein, um ein wechselseitiges Einfedern zu vermindern. Hierdurch kann über die X-Federeinrichtung, insbesondere deren erste Blattfedern, die Funktion eines Stabilisators dargestellt werden.

Ferner ist es möglich, das jeweilige Koppelglied als Fortsatz an einer eine Einspannung für die erste und zweite Blattfeder ausbildenden ersten Befestigungseinrichtung auszubilden, wodurch eine besonders hohe Funktionsintegration in einem einzigen Bauteil erzielt wird.

Nachfolgend wird die Erfindung anhand von in der Zeichnung dargestellten Ausführungsbeispielen näher erläutert. Die Zeichnung zeigt in:
- Figur 1: als erstes Ausführungsbeispiel einer X-Federeinrichtung nach der Erfindung in Einbaulage an einem Kraftfahrzeug bei Ruhestellung des Fahrzeugs auf einer horizontalen Fläche,

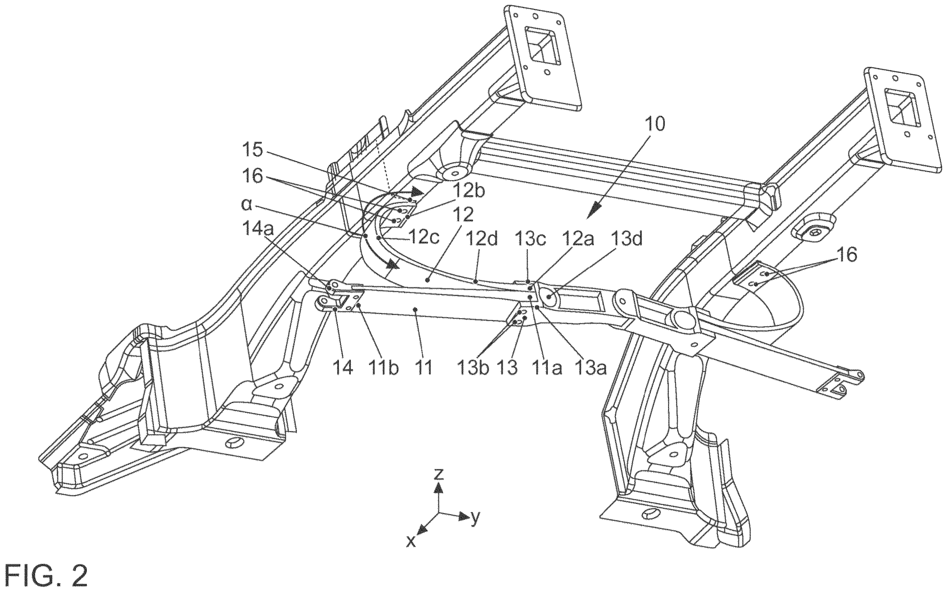

- Figur 2: eine weitere Darstellung der X-Federeinrichtung unter Auslassung des in Fig. 1 dargestellten Hilfsrahmens und der weiteren Radanbindungsstrukturen des Kraftfahrzeugs.

Das Ausführungsbeispiel zeigt eine X-Federeinrichtung 10 für eine Kraftfahrzeug-Radaufhängung in Einbaulage an einem Personenkraftfahrzeug. Die X-Federeinrichtung 10 weist je Radseite eine erste Blattfeder 11 und eine zweite Blattfeder 12 auf.

Beide Blattfedern 11 und 12 sind aus einem faserverstärkten Kunststoff, beispielsweise glasfaserverstärktem Kunststoff (GFK) oder kohlefaserverstärktem Kunststoff (CFK) gefertigt. Sie sind in dem dargestellten Ausführungsbeispiel als separate Bauteile ausgeführt. Es ist jedoch auch möglich, die erste und zweite Blattfeder 11 und 12 je Radseite in einen aus faserverstärktem Kunststoff gefertigten einstückigen Körper zu integrieren.

Die erste und zweite Blattfeder 11 und 12 sind übereinanderliegend angeordnet, so dass in Bezug auf die Fahrzeughochrichtung die zweite Blattfeder 12 über der ersten Blattfeder 11 verläuft.

Beide Blattfedern 11 und 12 sind an einem jeweils ersten Ende 11a und 12a an einer ersten Befestigungseinrichtung 13 zur fahrzeugaufbauseitigen Abstützung zusammengeführt. Ferner weist die erste Blattfeder 11 an ihrem zweiten Ende 11b eine zweite Befestigungseinrichtung 14 zur radseitigen Abstützung auf, wohingegen die zweite Blattfeder 12 an ihrem zweiten Ende 12b fahrzeugaufbauseitig abgestützt ist.

Während sich die erste Blattfeder 11 im Wesentlichen geradlinig von der Fahrzeugmitte zur Radseite nach außen erstreckt, bildet die zweite Blattfeder 12 zu ihrem zweiten Ende 12b hin einen Bogenabschnitt 12c aus, der von der ersten Blattfeder 11 weg gekrümmt ist.

Der Bogenabschnitt 12c am zweiten Ende 12b der zweiten Blattfeder 12 schließt nahtlos an einen weiteren Bogenabschnitt 12d oder geraden Abschnitt der zweiten Blattfeder 12 an, welcher größere Krümmungsradien als der erstgenannte Bogenabschnitt 12c am zweiten Ende 12b aufweist.

Der Bogenabschnitt 12c am zweiten Ende 12 der zweiten Blattfeder 12 erstreckt sich über einen Bogenwinkel α im Bereich von 150 bis 190°.

Auch im entspannten Zustand der X-Federeinrichtung 10 ist diese Formgebung der Blattfedern 11 und 12 bereits zu erkennen.

Würde man die zweite Blattfeder 12 gerade strecken, so wäre die gestreckte Länge der zweiten Blattfeder 12 größer als die gestreckte Länge der ersten Blattfeder 11.

Durch den Bogenabschnitt 12c am zweiten Ende 12 besitzt die zweite Blattfeder 12 ein erhöhtes Energieaufnahmevermögen beim Einfedern.

In Einbaulage am Fahrzeug weist das zweite Ende 12b der zweiten Blattfeder 12 in Richtung Fahrzeugmitte. Bei Blickrichtung in Richtung der Fahrzeuglängsmittelachse ist die zweite Blattfeder 12 C-förmig ausgebildet, wobei der untere Abschnitt der C-Form weiter in Richtung Fahrzeugmitte reicht als der obere Abschnitt der C-Form.

Die am ersten Ende 12a zunächst zur ersten Blattfeder 11 weisende Seite der zweiten Blattfeder 12 weist im weiteren Verlauf zum zweiten Ende 12b hin von der ersten Blattfeder 11 weg.

Am entsprechend einwärts gekrümmten zweiten Ende 12b der zweiten Blattfeder 12 kann eine Federauflage 15 zur Abstützung gegen den Fahrzeugaufbau von unten vorgesehen sein. Die Federauflage 15 kann beispielsweise als Streifen aus Elastomermaterial ausgebildet sein, welche einen unmittelbaren Kontakt des Faserverbundwerkstoffs der zweiten Blattfeder 12 mit dem Fahrzeugaufbau verhindert.

Die erste Befestigungseinrichtung 13 zur fahrzeugaufbauseitigen Abstützung befindet sich im Bereich der zusammengeführten ersten Enden 11a und 12a an der ersten und zweiten Blattfeder 11 und 12. Die X-Federeinrichtung 10 kann im Bereich der zusammengeführten ersten Enden 11a und 12a unmittelbar am Fahrzeugaufbau 30 oder an einer fahrzeugaufbaufesten Struktur wie beispielsweise einem Hilfsrahmen 31 oder dergleichen abgestützt werden.

Weiterhin befindet sich eine zweite Befestigungseinrichtung 14 am zweiten Ende 11b der ersten Blattfeder 11. Diese zweite Befestigungseinrichtung 14 dient der radseitigen Abstützung beispielsweise an einem Radträger 21 oder einem Radführungsglied. Ferner ist eine dritte Befestigungseinrichtung 16 am zweiten Ende 12b der zweiten Blattfeder 12 zur fahrzeugaufbauseitigen Befestigung vorgesehen.

Aufgrund des Bogenabschnitts 12c der zweiten Blattfeder 12 liegt deren fahrzeugaufbauseitige Abstützungsstelle am zweiten Ende 12b bei einer Anordnung der X-Federeinrichtung 10 in Fahrzeugquerrichtung näher zur Fahrzeugmitte als die radseitige Abstützungsstelle der ersten Blattfeder 11.

Die erste und zweite Blattfeder 11 und 12 können an ihren zusammengeführten ersten Enden 11a und 12a unmittelbar miteinander verspannt sein.

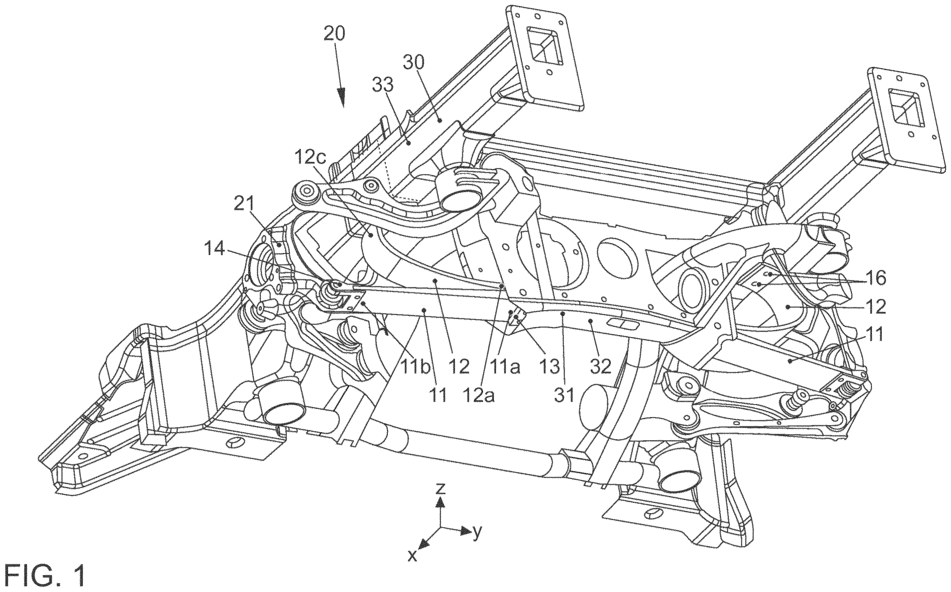

Bei dem in Figur 1 dargestellten Ausführungsbeispiel weist die erste Befestigungseinrichtung 13 eine Einspannung 13a zum gegenseitigen Verspannen der ersten Enden 11a und 12a der ersten und zweiten Blattfeder 11 und 12 auf. Mittels der Einspannung 13a kann ferner auch eine Drehbewegung der ersten Blattfeder 11, welche aus einem Einfedern und einer Verformung derselben resultiert, an die zweite Blattfeder 12 übertragen werden und umgekehrt.

Die Einspannung 13a kann beispielsweise als gabelförmige Klaue ausgeführt sein, in welche die ersten Enden 11a und 12a der ersten und zweiten Blattfeder 11 und 12 eingeführt sind. Die Ausgestaltung der Einspannung 13a ist jedoch nicht auf die Form einer solchen Klaue beschränkt. Vielmehr sind hier auch andere Ausgestaltungsformen möglich. Ein Verspannen kann mittels Spannbolzen 13b erfolgen. Über entsprechende Flanschabschnitte 13c der Klaue wird eine gleichmäßige Verteilung der Spannkraft über die Oberfläche der ersten Enden 11a und 12a erzielt.

Weiterhin ermöglicht die erste Befestigungseinrichtung 13 eine schwenkbare Lagerung der Federeinrichtung 10. Die erste Befestigungseinrichtung 13 kann dazu beispielsweise eine Aufnahme 13d für ein Lager zur schwenkbaren Abstützung am Fahrzeugaufbau 30 oder einem am Fahrzeugaufbau vorgesehenen Hilfsrahmen 31 aufweisen. Bei dem dargestellten Ausführungsbeispiel ist hierzu beispielhaft ein Lagerauge in die erste Befestigungseinrichtung 13 integriert. Als Aufnahme 13d für ein Lager kann jedoch beispielsweise auch ein Lagerbolzen oder dergleichen dienen, über den eine schwenkbare Lagerung realisierbar ist.

Die zweite Befestigungseinrichtung 14 kann beispielsweise eine Lageraufnahme 14a zur schwenkbaren Abstützung an einem Radträger aufweisen. Figur 1 zeigt hierzu rein beispielhaft eine als Gabel ausgebildete Lageraufnahme 14a, über welche beispielsweise ein Gummilager aufgenommen werden kann. Wie im Rahmen der ersten Befestigungseinrichtung 13 bereits erläutert, sind als Lageraufnahme 14a jedoch grundsätzlich auch andere Strukturen wie beispielsweise ein Lagerbolzen oder dergleichen möglich.

Die dritte Befestigungseinrichtung 16 zur Festlegung des zweiten Endes 12b der zweiten Blattfeder 12 besteht im einfachsten Fall lediglich aus einem oder mehreren Befestigungsmitteln wie Spannbolzen und dergleichen. Etwaige Relativbewegungen gegenüber dem Fahrzeugaufbau oder der fahrzeugaufbaufesten Struktur, welche sich infolge der Verformung der X-Federeinrichtung 10 kaum vermeiden lassen, werden durch den Bogenabschnitt 12c der zweiten Blattfeder 12 gut kompensiert. Jedoch kann an dieser Stelle gegebenenfalls zusätzlich eine gelenkige Ankopplung vorgesehen werden, um einen zusätzlichen Freiheitsgrad einzuführen.

Die Einbeziehung einer solchen X-Federeinrichtung 10 in eine Kraftfahrzeug-Radaufhängung 20 ist in Figur 1 gut zu erkennen.

Die Radaufhängung 20 umfasstje Fahrzeugrad einen Radträger 21, welcher über mehrere Radführungsglieder gegen den Fahrzeugaufbau 30 oder eine fahrzeugaufbaufeste Struktur wie einen Hilfsrahmen 31 abgestützt ist sowie weitere Radführungsglieder beispielsweise in Form von Querlenkern.

Die vorliegende Radaufhängung 20 kommt ohne eine Schraubenfeder zur Abstützung der Fahrzeugmasse aus. Deren Funktion wird vorliegend durch die X-Federeinrichtung 10 übernommen. Es ist jedoch möglich, in einer Radaufhängung 20, welche eine X-Federeinrichtung 10 der oben erläuterten Art beinhaltet, zusätzlich herkömmliche Schraubenfedern zur Abstützung der Fahrzeugmasse einzusetzen.

Die dargestellte Radaufhängung 20 ist lediglich beispielhafter Natur, um die Einbaulage der X-Federeinrichtung 10 in einer solchen näher zu erläutern. Es muss daher ausdrücklich betont werden, dass entsprechende X-Federeinrichtungen 10 auch in anderen Radaufhängungen 20 als dargestellt zum Einsatz kommen können, um die Masse des Fahrzeugaufbaus gegen die Fahrzeugräder abzustützen und gegebenenfalls zusätzlich Radführungsaufgaben zu übernehmen.

Die oben erläuterte X-Federeinrichtung 10 ist derart in die Radaufhängung 20 eingebaut, dass sich die ersten und zweiten Blattfedern 11 und 12 jeweils in Fahrzeugquerrichtung y erstrecken oder mit der Fahrzeugquerrichtung y bei Betrachtung in einer horizontalen Ebene xy einen Winkel von maximal +/-15° einschließen.

Die erste Blattfeder 11 liegt dabei in Bezug auf die Fahrzeughochrichtung z unter der zweiten Blattfeder 12.

Ferner erstreckt sich die X-Federeinrichtung 10 sehr weit in Richtung Fahrzeugmitte, wodurch sich für die ersten und zweiten Blattfedern 11 und 12 eine große Länge mit entsprechend hohem Energieabsorptionsvermögen ergibt. Durch die gewählte X-Form bleibt die Bauhöhe in Fahrzeughochrichtung z gering.

In Ruhestellung des Fahrzeugs auf einer horizontalen Fläche horizontal verlaufen die ersten Blattfedern 11 überwiegend horizontal, d.h. sie schließen mit einer horizontalen Ebene xy einen Winkel von maximal +/- 10° ein.

Wie Figur 1 zeigt, kann die X-Federeinrichtung 10 im Bereich der ersten Befestigungseinrichtung 13 an einer Querstrebe 32 des Hilfsrahmens 31 angelenkt sein.

Um eine möglichst große Länge der X-Federeinrichtung 10 in Fahrzeugquerrichtung y zu realisieren, werden die ersten Befestigungseinrichtungen 13 in Fahrzeugquerrichtung y bezogen auf die Spurweite des Fahrzeugs vorzugsweise in einem mittleren Drittel, und weiter bevorzugt in einem mittleren Fünftel, um die Längsmittelachse des Fahrzeugs angeordnet. Die Anbindung am Hilfsrahmen 31 erfolgt beispielsweise über ein Gummilager in der Aufnahme 13d der ersten Befestigungseinrichtung 13, so dass die Blattfederpaare jeder Radseite um eine in Fahrzeuglängsrichtung x verlaufende Drehachse schwenken können.

Die X-Federeinrichtung 10 kann über ein weiteres Gummilager schwenkbar am Radträger 21 angebunden werden. Dieses weitere Gummilager koppelt das zweite Ende 11b der ersten Blattfeder 11 gelenkig mit dem Radträger 21, wobei die zugehörige Schwenkachse des so gebildeten Gelenks ebenfalls überwiegend in Fahrzeuglängsrichtung x verläuft. Es ist jedoch auch möglich, das zweite Ende 11b der ersten Blattfeder 11 beispielsweise in einer Einspannung am Radträger 21 aufzunehmen, d.h. ungelenkig zu befestigen.

Schließlich stützt sich die X-Federeinrichtung 10 mit dem zweiten Ende 12b der zweiten Blattfeder 12 am Fahrzeugaufbau 30 ab. Hierdurch wird die aufbauseitige Krafteinleitung auf zwei Stellen verteilt. Eine solche Abstützung der zweiten Blattfeder 12 kann beispielsweise, wie in Figur 1 gezeigt, an einem Längsträger 33 des Fahrzeugaufbaus 30 erfolgen. Die Abstützung ist dabei von unten vorgenommen.

Die ersten Befestigungseinrichtungen 13 der beiden Radseiten sind in Fahrzeugquerrichtung in einem Mittelbereich angeordnet, welcher in Fahrzeugquerrichtung durch die Längsträger 33 des Fahrzeugaufbaus 30 begrenzt wird.

Optional können die ersten Befestigungseinrichtungen 13 in Fahrzeugmitte gelenkig miteinander verkoppelt werde, wie dies in DE 10 2016 220 325 A1 beschrieben ist, um über die X-Federanordnung 10 zusätzlich die Funktion eines Stabilisators darzustellen, da bei einem wechselseitigen Einfedern die X-Federeinrichtung 10 versteift. Ein separater Stabilisator wird damit überflüssig.

Die Erfindung ermöglicht eine flachbauende Kraftfahrzeugachse mit niedriger Kofferraum- bzw. Laderaumkante und hoher Kofferraum- bzw. Laderaumbreite.

Aufgrund der nach oben gezogenen Bogenabschnitte 12c der zweiten Blattfeder 12 ist ein Einsatz bei Fahrzeugen möglich, bei welchen gleichwohl die zweite Blattfeder 12 an ihrem zweiten Ende 12b verhältnismäßig weit oben abgestützt werden soll oder muss.

Der Gewichtsvorteil der Blattfedern 11 und 12 aus faserverstärktem Kunststoff kann praktisch vollständig in eine Gewichtsverminderung des Fahrzeuggewichts übersetzt werden, da im Bereich der aufbauseitigen Anbindung der X-Federeinrichtungen 10 keine gewichtserhöhenden Versteifungsmaßnahmen erforderlich werden, welche den Gewichtsvorteil der X-Federeinrichtungen 10 mit ersten und zweiten Blattfedern 11 und 12 aus faserverstärktem Kunststoff beeinträchtigen würden.

Die Erfindung wurde vorstehend anhand eines Ausführungsbeispiels und weiteren Abwandlungen näher erläutert. Das Ausführungsbeispiele und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel beschränkt, sondern umfasst alle durch die Patentansprüche definierten Ausgestaltungen.

### Bezugszeichenliste

- 10: Federeinrichtung
- 11: erste Blattfeder
- 12: zweite Blattfeder
- 11a: erstes Ende der ersten Blattfeder 11
- 11b: zweites Ende der ersten Blattfeder 11
- 12a: erstes Ende der zweiten Blattfeder 12
- 12b: zweites Ende der zweiten Blattfeder 11
- 12c: Bogenabschnitt
- 12d: weiterer Bogenabschnitt oder gerader Abschnitt
- 13: erste Befestigungseinrichtung
- 13a: Einspannung
- 13b: Spannbolzen
- 13c: Flanschabschnitt
- 13d: Lageraufnahme
- 14: zweite Befestigungseinrichtung
- 14a: Lageraufnahme
- 15: Federauflage
- 16: dritte Befestigungseinrichtung
- 20: Kraftfahrzeugradaufhängung
- 21: Radträger
- 30: Fahrzeugaufbau
- 31: Hilfsrahmen
- 32: Querstrebe
- 33: Längsträger
- x: Fahrzeuglängsrichtung
- y: Fahrzeugquerrichtung
- z: Fahrzeughochrichtung
- α: Bogenwinkel

## Patentansprüche

1. Kraftfahrzeug-Radaufhängung mit einer X-Federeinrichtung (10) , wobei die X-Federeinrichtung (10) umfasst:
je Radseite eine erste Blattfeder (11) und eine zweite Blattfeder (12) aus faserverstärktem Kunststoff, welche übereinanderliegend angeordnet und an einem jeweils ersten Ende (11a, 12a) an einer ersten Befestigungseinrichtung (13) zur fahrzeugaufbauseitigen Abstützung zusammengeführt sind, wobei die erste Blattfeder (11) an ihrem zweiten Ende (11b) eine zweite Befestigungseinrichtung (14) zur radseitigen Abstützung aufweist und die zweite Blattfeder (12) an ihrem zweiten Ende (12b) fahrzeugaufbauseitig abstützbar ist, wobei
die zweite Blattfeder (12) zu ihrem zweiten Ende (12b) hin einen Bogenabschnitt (12c) ausbildet, der von der ersten Blattfeder (11) derart weg gekrümmt ist, dass die zunächst zur ersten Blattfeder (11) weisende Seite der zweiten Blattfeder (12) im weiteren Verlauf zum zweiten Ende (12b) der zweiten Blattfeder (12) hin von der ersten Blattfeder (11) weg weist, **dadurch gekennzeichnet, dass** der Bogenabschnitt (12c) am zweiten Ende (12b) der zweiten Blattfeder (12) sich über einen Bogenwinkel im Bereich von 150 bis 190° erstreckt.

2. Kraftfahrzeug-Radaufhängung nach Anspruch 1, **dadurch gekennzeichnet, dass** der Bogenabschnitt (12c) am zweiten Ende (12b) der zweiten Blattfeder (12) an einen weiteren Bogenabschnitt oder geraden Abschnitt (12d) der zweiten Blattfeder (12) anschließt, welcher größere Krümmungsradien als der Bogenabschnitt (12c) am zweiten Ende (12b) aufweist.

3. Kraftfahrzeug-Radaufhängung nach einem der Ansprüche 1 oder 2, **dadurch gekennzeichnet, dass** die gestreckte Länge der zweiten Blattfeder (12) größer als die gestreckte Länge der ersten Blattfeder (11) ist.

4. Kraftfahrzeug-Radaufhängung nach einem der Ansprüche 1 bis 3, **dadurch gekennzeichnet, dass** am einwärts gekrümmten zweiten Ende (12b) der zweiten Blattfeder (12) eine Federauflage (15) zur Abstützung gegen einen Fahrzeugaufbau von unten vorgesehen ist.

5. Kraftfahrzeug-Radaufhängung nach einem der Ansprüche 1 bis 6, **dadurch gekennzeichnet, dass** die erste Befestigungseinrichtung (13) eine Einspannung (13a) zum gegenseitigen Verspannen der ersten Enden (11a, 12a) der ersten und zweiten Blattfeder (11, 12) aufweist und/oder die erste Befestigungseinrichtung (13) eine Aufnahme (13d) für ein Lager zur schwenkbaren Abstützung an einem Fahrzeugaufbau (30) oder einer fahrzeugaufbaufesten Struktur einschließlich eines am Fahrzeugaufbau (30) vorgesehenen Hilfsrahmens (31) aufweist.

6. Kraftfahrzeug mit einem Fahrzeugaufbau (30) sowie einer Kraftfahrzeug1-Radaufhängung (20) nach einem der Ansprüche 1 bis 5, wobei die zweite Blattfeder (12) an ihrem zweiten Ende (12b) am Fahrzeugaufbau (30) abgestützt ist.

7. Kraftfahrzeug nach Anspruch 6, **dadurch gekennzeichnet, dass** das zweite Ende (12b) der zweiten Blattfeder (12) in Richtung einer Fahrzeugmitte weist.

8. Kraftfahrzeug nach Anspruch 6 oder 7, **dadurch gekennzeichnet, dass** die zweite Blattfeder (12) in Einbaulage und bei Blickrichtung in Richtung einer Fahrzeuglängsmittelachse C-förmig ausgebildet ist.

9. Kraftfahrzeug nach einem der Ansprüche 6 bis 8, wobei die ersten Blattfedern (11) in Ruhestellung des Fahrzeugs auf einer horizontalen Fläche horizontal verlaufen oder mit einer horizontalen Ebene einen Winkel von maximal +/- 10° einschließen.

10. Kraftfahrzeug nach einem der Ansprüche 6 bis 9, wobei die ersten Blattfedern (11) sich jeweils in Fahrzeugquerrichtung erstrecken oder mit dieser bei Betrachtung in einer horizontalen Ebene einen Winkel von maximal +/-15° einschließen.

11. Kraftfahrzeug nach einem der Ansprüche 6 bis 10, **dadurch gekennzeichnet, dass** je Radseite die Abstützung der zweiten Blattfeder (12) an einem Längsträger (33) des Fahrzeugaufbaus (30) von unten erfolgt.

12. Kraftfahrzeug nach Anspruch 11, **dadurch gekennzeichnet, dass** die ersten Befestigungseinrichtungen (13) der beiden Radseiten in Fahrzeugquerrichtung in einem Mittelbereich angeordnet sind, welcher in Fahrzeugquerrichtung durch die Längsträger (33) des Fahrzeugaufbaus (30) begrenzt wird.

13. Kraftfahrzeug nach Anspruch 12, **dadurch gekennzeichnet, dass** die ersten Befestigungseinrichtungen (13) in Fahrzeugquerrichtung bezogen auf die Spurweite des Fahrzeugs in einem mittleren Drittel, insbesondere mittleren Fünftel, um eine Fahrzeuglängsmittelachse angeordnet sind.

14. Kraftfahrzeug nach Anspruch 12, **dadurch gekennzeichnet, dass** die ersten Befestigungseinrichtungen (13) in Fahrzeugquerrichtung bezogen auf die Spurweite des Fahrzeugs in einem mittleren Fünftel um eine Fahrzeuglängsmittelachse angeordnet sind.

## Claims

1. Motor vehicle wheel suspension having an X-spring device (10), the X-spring device (10) comprising:
on each wheel side, a first leaf spring (11) and a second leaf spring (12) made of fiber-reinforced plastics material, which are arranged one above the other and are brought together at a relevant first end (11a, 12a) at a first fastening device (13) for support on the vehicle body side, the first leaf spring (11) having a second fastening device (14) at the second end (11b) thereof for support on the wheel side, and the second leaf spring (12) being supportable on the vehicle body side at the second end (12b) thereof,
the second leaf spring (12) forming an arcuate portion (12c) toward the second end (12b) thereof, which portion is curved away from the first leaf spring (11) in such a way that the side of the second leaf spring (12) initially pointing toward the first leaf spring (11) points away from the first leaf spring (11) in the further course toward the second end (12b) of the second leaf spring (12), **characterized in that**
the arcuate portion (12c) at the second end (12b) of the second leaf spring (12) extends over an arc angle in the range of 150 to 190°.

2. Motor vehicle wheel suspension according to claim 1,
**characterized in that** the arcuate portion (12c) at the second end (12b) of the second leaf spring (12) adjoins a further arcuate portion or straight portion (12d) of the second leaf spring (12), which further portion has larger radii of curvature than the arcuate portion (12c) at the second end (12b).

3. Motor vehicle wheel suspension according to either claim 1 or claim 2,
**characterized in that** the extended length of the second leaf spring (12) is greater than the extended length of the first leaf spring (11).

4. Motor vehicle wheel suspension according to any of claims 1 to 3,
**characterized in that** a spring support (15) for support against a vehicle body from below is provided on the inwardly curved second end (12b) of the second leaf spring (12).

5. Motor vehicle wheel suspension according to any of claims 1 to 6,
**characterized in that** the first fastening device (13) has a clamping means (13a) for clamping the first ends (11a, 12a) of the first and second leaf springs (11, 12) against one another, and/or the first fastening device (13) has a receptacle (13d) for a bearing for pivotable support on a vehicle body (30) or a structure fixed to the vehicle body, including an auxiliary frame (31) provided on the vehicle body (30).

6. Motor vehicle comprising a vehicle body (30) and a motor vehicle wheel suspension (20) according to any of claims 1 to 5, wherein the second leaf spring (12) is supported on the vehicle body (30). at the second end (12b) thereof

7. Motor vehicle according to claim 6, **characterized in that** the second end (12b) of the second leaf spring (12) points in the direction of a vehicle center.

8. Motor vehicle according to either claim 6 or claim 7, **characterized in that** the second leaf spring (12) is C-shaped in the installed position and when viewed in the direction of a vehicle longitudinal center axis.

9. Motor vehicle according to any of claims 6 to 8, wherein when the vehicle is in a parking position on a horizontal surface, the first leaf springs (11) extend horizontally or enclose an angle of at most +/- 10° with a horizontal plane.

10. Motor vehicle according to any of claims 6 to 9, wherein the first leaf springs (11) each extend in the vehicle transverse direction or enclose an angle of at most +/-15° therewith when viewed in a horizontal plane.

11. Motor vehicle according to any of claims 6 to 10, **characterized in that,** on each wheel side, the second leaf spring (12) is supported on a longitudinal member (33) of the vehicle body (30) from below.

12. Motor vehicle wheel suspension according to claim 11,
**characterized in that** the first fastening devices (13) of the two wheel sides are arranged in a central region in the vehicle transverse direction, which central region is delimited in the vehicle transverse direction by the longitudinal supports (33) of the vehicle body (30).

13. Motor vehicle according to claim 12, **characterized in that** the first fastening devices (13) are arranged in the vehicle transverse direction with respect to the track width of the vehicle in a middle third, in particular middle fifth, around a vehicle longitudinal center axis.

14. Motor vehicle according to claim 12, **characterized in that** the first fastening devices (13) are arranged in the vehicle transverse direction with respect to the track width of the vehicle in a middle fifth around a vehicle longitudinal center axis.

## Revendications

1. Suspension de roue de véhicule automobile comportant un dispositif à ressort en X (10), dans laquelle le dispositif à ressort en X (10) comprend :
pour chaque côté de roue, un premier ressort à lame (11) et un second ressort à lame (12) en matière plastique renforcée par des fibres, lesquels ressorts à lame sont disposés l'un au-dessus de l'autre et sont réunis, au niveau d'une première extrémité (11a, 12a) respective, au niveau d'un premier dispositif de fixation (13) pour l'appui côté carrosserie de véhicule, dans laquelle le premier ressort à lame (11) présente, au niveau de sa seconde extrémité (11b), un second dispositif de fixation (14) pour l'appui côté roue et le second ressort à lame (12) peut venir en appui, au niveau de sa seconde extrémité (12b), côté carrosserie de véhicule,
dans laquelle
le second ressort à lame (12) réalise, en direction de sa seconde extrémité (12b), une section arquée (12c) qui est courbée de manière à s'éloigner du premier ressort à lame (11) de telle sorte que le côté du second ressort à lame (12), lequel côté est d'abord tourné vers le premier ressort à lame (11), est ultérieurement orienté vers la seconde extrémité (12b) du second ressort à lame (12), en s'éloignant du premier ressort à lame (11), **caractérisée en ce que**
la section arquée (12c) au niveau de la seconde extrémité (12b) du second ressort à lame (12) s'étend dans un angle d'arc dans la plage allant de 150 à 190°.

2. Suspension de roue de véhicule automobile selon la revendication 1, **caractérisée en ce que** la section arquée (12c) au niveau de la seconde extrémité (12b) du second ressort à lame (12) se raccorde à une autre section arquée ou à une section droite (12d) du second ressort à lame (12), laquelle autre section présente des rayons de courbure plus grands que ceux de la section arquée (12c) au niveau de la seconde extrémité (12b).

3. Suspension de roue de véhicule automobile selon l'une des revendications 1 ou 2, **caractérisée en ce que** la longueur étirée du second ressort à lame (12) est supérieure à la longueur étirée du premier ressort à lame (11).

4. Suspension de roue de véhicule automobile selon l'une des revendications 1 à 3, **caractérisée en ce que,** au niveau de la seconde extrémité (12b) courbée vers l'intérieur du second ressort à lame (12), un support pour ressort (15) est prévu pour l'appui par le bas à l'encontre d'une carrosserie de véhicule.

5. Suspension de roue de véhicule automobile selon l'une des revendications 1 à 6, **caractérisée en ce que** le premier dispositif de fixation (13) présente un serrage (13a) pour le serrage réciproque des premières extrémités (11a, 12a) du premier et du second ressort à lame (11, 12) et/ou le premier dispositif de fixation (13) présente un logement (13d) pour un palier permettant l'appui de manière à pouvoir tourner sur une carrosserie de véhicule (30) ou une structure solidaire de la carrosserie de véhicule, y compris un faux-châssis (31) prévu au niveau de la carrosserie de véhicule (30).

6. Véhicule automobile comportant une carrosserie de véhicule (30) ainsi qu'une suspension de roue de véhicule automobile (20) selon l'une des revendications 1 à 5, dans lequel le second ressort à lame (12) est, au niveau de sa seconde extrémité (12b), en appui sur la carrosserie de véhicule (30).

7. Véhicule automobile selon la revendication 6, **caractérisé en ce que** la seconde extrémité (12b) du second ressort à lame (12) est orientée en direction d'un centre de véhicule.

8. Véhicule automobile selon la revendication 6 ou 7, **caractérisé en ce que** le second ressort à lame (12) est réalisé en forme de C en position de montage et en regardant en direction d'un axe médian longitudinal de véhicule.

9. Véhicule automobile selon l'une des revendications 6 à 8, dans lequel les premiers ressorts à lame (11) s'étendent horizontalement sur une surface horizontale ou forment, avec un plan horizontal, un angle de +/- 10° au maximum lorsque le véhicule est à l'état de repos.

10. Véhicule automobile selon l'une des revendications 6 à 9, dans lequel les premiers ressorts à lame (11) s'étendent respectivement dans la direction transversale de véhicule ou forment avec celle-ci, en les considérant dans un plan horizontal, un angle de +/- 15° au maximum.

11. Véhicule automobile selon l'une des revendications 6 à 10,
**caractérisé en ce que,** pour chaque côté de roue, l'appui du second ressort à lame (12) sur un longeron (33) de la carrosserie de véhicule (30) est effectué par le bas.

12. Véhicule automobile selon la revendication 11, **caractérisé en ce que** les premiers dispositifs de fixation (13) des deux côtés de roue sont disposés dans une zone médiane dans la direction transversale de véhicule, laquelle zone médiane est délimitée dans la direction transversale de véhicule par les longerons (33) de la carrosserie de véhicule (30).

13. Véhicule automobile selon la revendication 12, **caractérisé en ce que** les premiers dispositifs de fixation (13) sont disposés dans la direction transversale de véhicule par rapport à la largeur de voie du véhicule dans un tiers médian, en particulier un cinquième médian, autour d'un axe médian longitudinal de véhicule.

14. Véhicule automobile selon la revendication 12, **caractérisé en ce que** les premiers dispositifs de fixation (13) sont disposés dans la direction transversale de véhicule par rapport à la largeur de voie du véhicule dans un cinquième médian autour d'un axe médian longitudinal de véhicule.
